Europäisches Patentamt

**European Patent Office**

Office européen des brevets

(11) Publication number: **0 046 384**
**A1**

# (12) EUROPEAN PATENT APPLICATION

(21) Application number: **81303711.6**

(22) Date of filing: **14.08.81**

(51) Int. Cl.³: **A 01 K 11/00,** G 09 F 3/03,
B 65 D 77/18

(30) Priority: **15.08.80 IE 1735/80**

(43) Date of publication of application: **24.02.82**
**Bulletin 82/8**

(84) Designated Contracting States: **AT BE CH DE FR GB IT**
**LI LU NL SE**

(71) Applicant: **Temple, Ronald Michael, Glenthorpe,**
**Ronamance, Corrandulla County Galway (IE)**

(72) Inventor: **Temple, Ronald Michael, Glenthorpe,**
**Ronamance, Corrandulla County Galway (IE)**

(74) Representative: **Arthur, George Fitzgerald et al,**
**KILBURN & STRODE 30, John Street, London WC1N 2DD**
**(GB)**

(54) **A tag.**

(57) The invention concerns a tag which may be used as a tamper-proof closure for containers but which is preferably for use as an ear tag for animals such as cattle. The tag comprises a strip of material (1) which is bent upon itself to form two limbs (2, 3). One limb (2) has an upstanding hollow tubular rivet (4) which engages with a complementary receiver portion (5) in the opposite limb. The receiver portion (5) has an annular channel-shaped recess (6) and an upstanding centre portion (57). The upstanding centre portion (57) is formed with an annular flange (60), which in a preferred embodiment comprises a disc attached by means of a weak spot weld (61) to the upstanding centre portion (57). When the rivet (4) is pressed into engagement with the receiver portion (5) the disc is located within the outer end of the rivet (4) and the outer peripheral edge of the rivet (4) is curled inwardly to engage beneath the disc. The spot weld (61) acts as a weakened zone which will rupture if an attempt is made to prise the engaged limbs apart.

## A TAG

The invention relates to tags and is particularly concerned with ear tags for animals, although the tags may also be used as tamper-proof tags for closing containers such as plastic bags and the like.

Ear tags are commonly used to identify livestock, particularly cattle. It is most important that the ear tag should be tamper-proof so that the tag cannot be removed and applied to a different animal.

It is an object of the invention to provide a tag which is simple to manufacture, easy to apply, and which when closed cannot be reopened without permanently deforming the tag.

According to the invention a tag comprises a strip of material adapted to be bent upon itself to form two opposed limbs, and having an upstanding tubular portion extending substantially perpendicularly from one limb which is adapted to engage with a complementary receiver portion in the other limb, wherein the receiver portion comprises an annular channel-shaped recess in the limb, the outer diameter of which is at least equal to the outer diameter of the free end of the tubular portion, the axially inner portion of the recess having an upstanding centre portion which includes an annular flange spaced from the bottom of the recess, the arrangement being such that when the tubular portion is pressed into contact with the receiver portion with a sufficiently heavy pressure, the annular flange fits within the outer end of the tubular portion, and the peripheral edge of the tubular portion is curled inwardly to engage beneath the flange, and wherein there is provided a weakened zone in the region of the annular flange. Thus, the flange will tend to rupture and separate from the limb if an attempt is made to force open a closed tag, while the edges of the tubular portions are completely concealed beneath the flange and cannot be prised up to open the tag.

Preferably, the annular recess is of curved part-circular contour in cross-section such that on pressing the peripheral edge of the tubular portion into the recess, the edge is turned by the recess and rolled inwardly beneath the annular flange. The tubular portion and the receiver portion are preferably located adjacent to the extremities of the respective limbs of the tag.

In a preferred embodiment the flange is in the form of a circular disc or plate which is attached to an upstanding centre portion of the recess by means of a weak spot weld which forms the weakened zone.

In an alternative embodiment the material defining the axially inner periphery of the recess is rolled upwardly, outwardly, and downwardly (in relation to the recess) to form an annular hook-shaped flange which faces into the recess. In this embodiment the weakened zone may be formed in the region where the inner edge of the recess is rolled upwards in the formation of the annular flange. In this embodiment the flange defines a circular hole in the limb which is concentric with and surrounded by the annular recess. This has the advantage that it is possible to see from the outside of the tag, through the hole, whether or not the flange of a closed tag has been ruptured.

The tubular portion may be in the form of a hollow cylindrical rivet and preferably the thickness of the material from which the rivet is formed is less at the peripheral edge of the rivet than at the foot of the rivet, to permit the edge to deform more easily under compression. This also has the advantage that the edge of the rivet is comparatively sharp thus enabling it, when used as an ear tag, to pierce the animal's ear on application of the tag. The rivet may be attached to the limb by a plurality of spot welds. In an alternative arrangement a hole is formed in the limb at the base of the rivet to permit the severed fragments of the ear to be ejected from within the rivet.

The tag of the invention may be formed from various materials. For clinical purposes stainless steel is most satisfactory, although aluminium or brass may also be used.

Some embodiment of a tag according to the invention are illustrated in the accompanying drawings, wherein:

Figure 1 is a plan view of one embodiment of a tag of the invention before the strip has been bent to form the limbs;

Figure 2 is a sectional elevation on the line A - A of Figure 1;

Figure 3 is a sectional side elevation of the tag of Figure 1 in the open position;

Figure 4 is a sectional side elevation of a detail of the tag in the closed position;

Figure 5 is a sectional side elevation of a second embodiment of an ear tag of the invention shown in the open position;

Figure 6 shows a detail of the tag of Figure 5 to an enlarged scale in the open position;

Figure 7 shows a detail of the tag. of Figure 5 to an enlarged scale in the closed position;

Figure 8 is a perspective view of the tag of Figure 5 in the open position; and

Figures 9 and 10 are a perspective and part-sectional view, respectively, of a third embodiment of the invention.

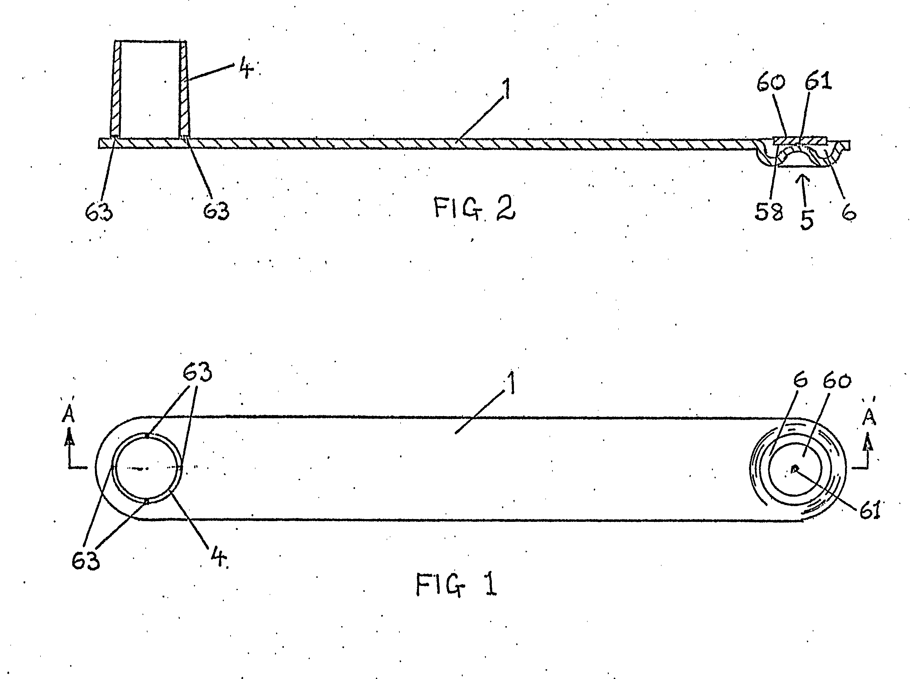

Referring to Figures 1 to 4 of the drawings, these show a first embodiment of an ear tag for animals, particularly cattle. The tag comprises a substantially flat strip 1 of a malleable material which can be folded upon itself to form two opposed limbs 2, 3. The limb 2 has an upstanding tubular portion which may be in the form of a hollow rivet 4. The rivet 4 is positioned adjacent the free end of limb 2 and extends perpendicularly from the limb towards the opposed limb 3. The rivet 4 is adapted to engage with a complementary portion 5, which is positioned adjacent the free end of limb 3.

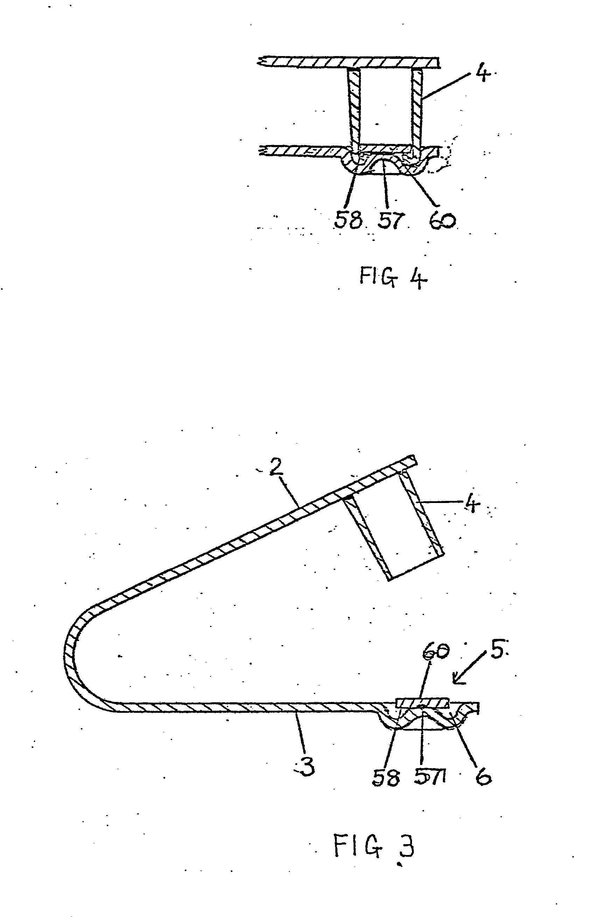

As best seen in Figures 2 and 3, the receiver portion 5 comprises annular channel-shaped recess 6 formed in the limb 3. The outer diameter of the recess is slightly greater than the outer diameter of the free end of the rivet 4.

The axially inner portion of the recess is formed with a central portion 57 which is pressed upwardly. A substantially flat circular disc 60 is attached to the upstanding portion 57 to form an annular flange 58 which is spaced from the bottom of the channel-shaped recess 56. The disc 60 is preferably attached to the upstanding portion by a weak spot-weld 61. The annular flange 58 is of slightly smaller outer diameter than the inner diameter of the free end of the rivet 4.

In order to close the tag, the rivet 4 and receiver portion 5 are pressed into contact with each other by a suitable tool, whereupon the annular flange 58 fits within the open end of the rivet 4 and the peripheral edge of the rivet enters the recess 6. The recess 6 has a curved part-circular contour and thus serves as a die causing the edge of the rivet 4 to turn inwardly of the flange 58. In this way a secure connection between the rivet 4 and flange 58 is obtained.

0046384

The weak spot weld 61 forms the weakened zone between the flange 58 and the upstanding portion 57. Thus, if an attempt is made to prise the rivet 4 out of engagement with the flange 58, the weakened zone will rupture and the flange 58 will become detached. With the flange 58 detached it is no longer possible to re-engage the rivet 4 with the limb 3 to close the tag.

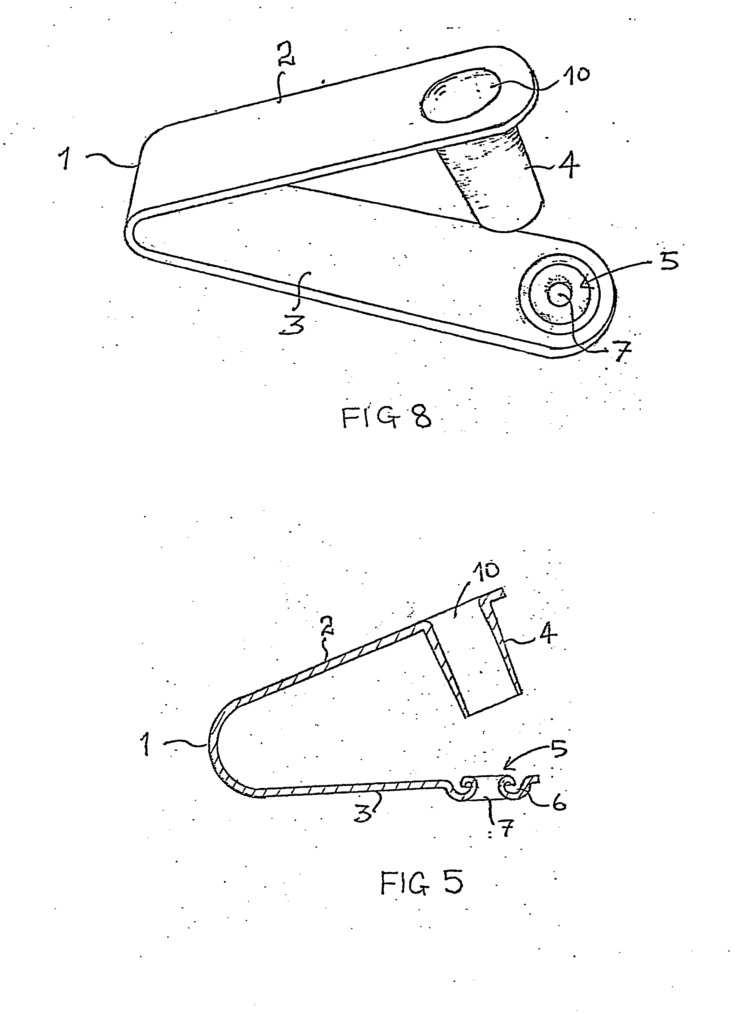

Referring now to Figures 5 to 8, these show a second embodiment of a tag of the invention and like parts have been designated by like reference numerals. In this embodiment the axially inner edge of the recess 6 is formed by punching a circular hole 7 in the limb 3. The material displaced by the formation of the hole 7 is rolled upwardly towards the opposed limb 2, outwardly, and then downwardly to form an annular hook-shaped flange 8, which faces into the recess 6. The annular flange 8 is of slightly smaller outer diameter than the inner diameter of the free end of the rivet 4. The upwardly rolled material forms an upstanding neck portion 57.

In order to close the tag, the rivet 4 and receiver portion 5 are pressed into contact with each other by a suitable tool, whereupon the annular flange 8 fits within the open end of the rivet 4 and the peripheral edge of the rivet enters the recess 6. The recess 6 has a curved part-circular contour and thus serves as a die causing the edge of the rivet 4 to turn inwardly and upwardly to crimp beneath the outwardly and downwardly rolled edge of the flange 8. In this way a secure connection between the rivet 4 and flange 8
is obtained.

A weakened zone 9 is formed at the base of the flange 8,
preferably by reducing the thickness of material of the
upstanding neck portion 57. Thus, if an attempt is made
to prise the rivet 4 out of engagement with the flange 8,
the weakened zone will rupture and the flange 8 will
become detached. With the flange 8 detached it is no
longer possible to re-engage the rivet 4 with the limb 3
to close the tag. Furthermore, even if a tag is forced
open, applied to the ear of another animal, and partly
closed, this will be clearly evident because it will be
possible to see through the hole 7 that the flange 8 has
been ruptured.

The tags of the invention may be pressed from suitable
sheet material such as stainless steel. The rivet 4 may
be formed integrally with the limb 2 or it may be brazed
thereto. Alternatively, as shown in Figures 1 and 2, the
rivet may be attached to the limb 3 by four spot-welds 63.
Preferably, the thickness of the material forming the
rivet 4 decreases progressively towards the outer
peripheral edge of the rivet. The reduction in the
thickness of the material at the free end of the rivet
facilitates the inward rolling of the edge when the tag is
closed. As is the conventional practice the application
of the tag to the ear of the animal also serves to pierce
the ear and the reduction in the thickness of the edge
portion of the rivet also facilitates this. In the embodiment of Figures 5 to 8 a hole 10 is formed in the limb 2 at the base of the rivet 4 to permit the severed fragment of ear to be ejected from the hollow interior of the rivet 4.

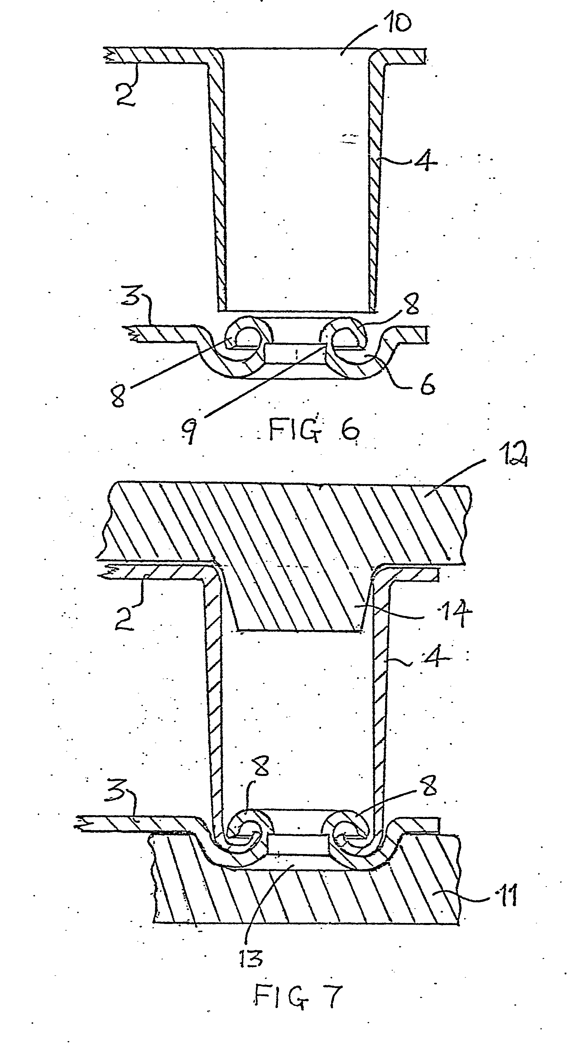

The tags may be closed by a pliers-like hand tool in well known manner. Portions of the jaws 11, 12 of the hand tool are shown in Figure 7. The lower jaw 11 has an annular concave die 13 which fits about the outer wall of the annular recess 6, while the upper jaw 12 has a projecting conical-shaped die portion 14 which fits within the hole 10 and serves to locate the rivet 4 on the die. Preferably, the hand tool has a cam action such that when the rivet 4 and flange 8 have been crimped together further pressure on the handles of the tool will cause the jaws of the tool to open.

By way of example, a convenient length for the limbs 2, 3 is about 37 mm while the thickness of the material from which the limbs are formed can be about 0.7 mm. However, the thickness of the material of flange 4 is reduced to about 0.4 mm while in the weakened zone 9 the thickness of the material is further reduced to about 0.2 mm. Preferably, the length of the rivet 4 in the closed position is slightly greater than the thickness of the animal's ear and a length of between 10.0 mm and 12.0 mm has been found to be suitable. The thickness of the material forming the rivet 4 is suitably about 0.7 mm at the base of the rivet but progressively reducing to about 0.3 mm at the free edge of the rivet. The radius of curvature of the recess 6 is suitably about 1.75 mm.

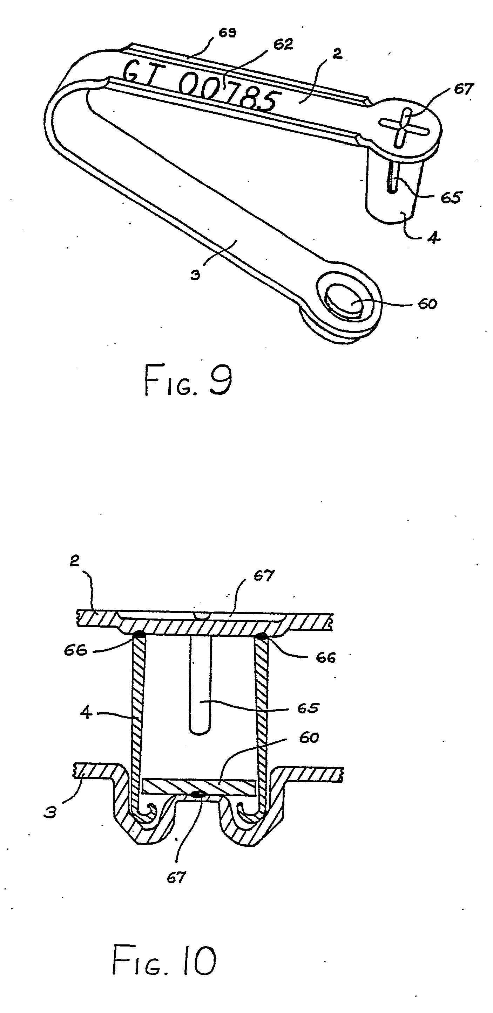

The tag shown in Figs. 9 and 10 is a preferred modification of that shown in Figs. 1 to 4, and like parts are designated by like reference numberals. In this embodiment the rivet 4 is formed with a pair of diametrically opposed slots 65 in the wall of the rivet. The slots extend axially from the base of the rivet for a distance equal to about ½ of the axial length of the rivet 4. For example, where the rivet 4 is about 6.3 mm in diameter by 11 mm in length, the slots 65 may be about 5 mm in length and 1 mm in width. The purpose of the slots 65 is to prevent tampering with the tag by cutting through the rivet 4. The only feasible way of rejoining a cut rivet would be to plug or resleeve the rivet and such would clearly be visible through the slots. The rivet 4 is attached to the limb 2 by four spot-welds 66. To facilitate this spot-welding a cruciform-shaped depression 67 is pressed into the limb 3 to provide upstanding portions on the interior of the limb to which the rivet 4 can be spot-welded. The spot-welds 66 and 61 form weakened zones which will rupture if tampering occurs. A number 68 or other identification mark may be engraved or punched into the surface of the limb 3. In order to prevent erasure of the number by wear raised flange portions 69 are preferably provided on the limb 3 to each opposite side of the number 68.

Although the tag of the invention is primarily for use as an ear tag for animals, it may also be used as a tamper-proof closure tag for containers such as bags; for example plastic bags, canvas bags such as mail or cash bags and the like. In such a case at least one of the limbs may be provided on the inner side thereof with tangs or the like which penetrate the material of the bag when the tag is closed.

CLAIMS

1.    A tag comprising a strip of material (1) adapted to be bent upon itself to form two opposed limbs (2, 3), and having an upstanding tubular portion (4) extending substantially perpendicularly from one limb (2) which is adapted to engage with a complementary receiver portion (5) in the other limb, characterised in that the receiver portion comprises an annular channel-shaped recess (6) in the limb (3), the outer diameter of which is at least equal to the outer diameter of the free end of the tubular portion (4), the axially inner portion of the recess having an upstanding centre portion (57) which includes an annular flange (60) spaced from the bottom of the recess, the arrangement being such that when the tubular portion (4) is pressed into contact with the rceiver portion (5) with a sufficiently heavy pressure, the annular flange (60) fits within the outer end of the tubular portion (4), and the peripheral edge of the tubular portion is curled inwardly to engage beneath the flange (60), and wherein there is provided a weakened zone (61, 9) in the region of the annular flange.

2.    A tag according to claim 1, characterised in that the annular recess (6) is of curved part-circular contour in cross-section such that on pressing the peripheral edge of the ·tubular portion (4) into the recess (6), the edge is turned by the recess and rolled inwardly beneath the annular flange (60).

3.    A tag according to claim 1 or claim 2, characterised in that the flange is in the form of a circular disc (60) attached to the upstanding centre portion (57) of the recess (6).

4.    A tag according to claim 3, characterised in that the disc is attached to the upstanding centre portion by means of a weak spot weld (61) which forms the weakened zone.

5.    A tag according to claim 1 or claim 2, characterised in that the material defining the axially inner periphery of the recess (6) is rolled upwardly, outwardly, and downwardly (in relation to the recess) to form the annular flange (8) which is hook-shaped and faces into the recess (6).

6.    A tag according to claim 5, characterised in that the weakened zone
(9) is formed in the region (57) where the inner edge of the recess is
rolled upwards in the formation of the flange.

7.    A tag according to either of claims 5 or 6, characterised in that
the flange defines a circular hole (7) in the limb (3) which is concentric with and surrounded by the annular recess (6).

8.    A tag according to any of the preceding claims, characterised in
that the tubular portion (4) is in the form of a hollow cylindrical rivet
and the thickness of the material from which the rivet is formed is less
at the peripheral outer edge of the rivet than at the foot of the rivet
so as to permit the edge to deform more easily under compression.

9.    A tag according to any of the preceding claims, characterised in
that the tubular portion (4) is formed with a pair of diametrically
opposed slots (65) in the wall thereof which extend axially from the
base of the tubular portion (4) for a part of its axial length.

10.  An ear tag for animals, characterised in that it comprises a tag
as claimed in any of the preceding claims.

FIG. 2

FIG 1

FIG 4

FIG 3

FIG 8

FIG 5

0046384

FIG 6

FIG 7

Fig. 9

Fig. 10

European Patent
Office

EUROPEAN SEARCH REPORT

0046384
Application number

EP 81 30 371

## DOCUMENTS CONSIDERED TO BE RELEVANT

| Category | Citation of document with indication, where appropriate, of relevant passages | Relevant to claim |
|---|---|---|
| | US - A - 1 436 119 (TIMSON)<br><br>* the whole document * | 1,2,8 |
| | FR - A - 581 389 (VENTURI)<br><br>* page 1, line 58 to page 2, line 25; figures 7-9 * | 1,2 |
| | FR - A - 563 072 (FRITSCH)<br><br>* abstract; figures 7-8 * | 5,7 |
| | FR - A - 732 866 (NIEDECKER)<br><br>* the whole document * | 2 |
| | FR - A - 957 293 (STOFFEL)<br><br>* page 2, lines 27 to 47; figures 4-6 * | 5,7 |
| | FR - A - 386 452 (VILBONNET)<br><br>* page 2, lines 4 to 14 * | 1 |
| | US - A - 2 130 787 (BORLAND)<br><br>* page 1, right-hand column, lines 26 to 39 * | 1 |
| | | ./. |

**CLASSIFICATION OF THE APPLICATION (Int. Cl.3)**

A 01 K 11/00
G 09 F 3/03
B 65 D 77/18

**TECHNICAL FIELDS SEARCHED (Int. Cl.3)**

A 01 K
G 09 F
B 65 D
F 16 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-11-1981 | CRUCHTEN |

EPO Form 1503.1  06.78

European Patent
Office

**EUROPEAN SEARCH REPORT**

| | **DOCUMENTS CONSIDERED TO BE RELEVANT** | | CLASSIFICATION OF THE APPLICATION (Int. Cl.³) |
|---|---|---|---|
| Category | Citation of document with indication, where appropriate, of relevant passages | Relevant to claim | |
| | US - A - 1 347 868 (NICHOLS)<br><br>* page 1, lines 43 to 54 *<br><br>-------- | 8 | |
| | | | **TECHNICAL FIELDS SEARCHED (Int. Cl.³)** |